# EUROPEAN PATENT APPLICATION

(11) **EP 4 112 889 A1**
(43) Date of publication of application: **04.01.2023**
(21) Application number: 22182403.0
(22) Date of filing: 30.06.2022
(51) Int. Cl.: F01D 25/24

(54) **OUTSIDE FIT FLANGE FOR AIRCRAFT ENGINE**

(30) Priority: 30.06.2021 US 202117363384
(71) Applicant: PRATT & WHITNEY CANADA CORP., Longueuil, Québec J4G 1A1 (CA)
(72) Inventor: EARNSHAW, Matthew, (01BE5) Longueuil, J4G 1A1 (CA); URAC, Tibor, (01BE5) Longueuil, J4G 1A1 (CA)
(74) Representative: Dehns

(57) **Abstract**

A component (30) of an aircraft engine (10) includes an annular flange (32) disposed about a radially outer surface (31b) of the component (30). The annular flange (32) includes an annular wall extending radially outwardly from the radially outer surface (31b) of the component (30). The annular wall includes radially-extending supports (38) circumferentially spaced apart and extending radially between the radially outer surface (31b) of the component (30) and a circumferentially uninterrupted radially outer rim (32a) of the annular wall. The annular wall includes one or more arcuate cutouts (37) defined circumferentially between adjacent radially-extending supports (38) and radially inwards of the radially outer rim (32a) of the annular wall. The radially-extending supports (38) include fastener openings (36) defined axially therethrough. A spigot (35) extends axially from the radially outer rim (32a) of the annular wall and circumferentially about an entire circumference of the radially outer rim (32a) of the annular wall.

## Description

### TECHNICAL FIELD

The disclosure relates generally to aircraft engines and, more particularly, to mating assemblies with annular flanges in aircraft engines.

### BACKGROUND

Flanges are used in mating assemblies of aircraft engines for joining two adjacent components, at least one of which includes the flange. The two components are often together by threaded fasteners (for instance bolts) passing through holes in the flange and by an interference fit created by the flange and the second component.

Inside-fit flanges, whereby the interference fit is formed at a radially-inner portion of the flange, may be conducive to traditional weight-loss techniques such as scalloping. However, outside-fit flanges, whereby the interference fit is formed at a radially-outer portion of the flange, may not benefit from such weight-loss techniques. As the interference or friction fit occurs at the radially-outer end of the flange, a constant circumference may be required to withstand the various stresses endured, preserve the flange's structural integrity and prevent the radially outer end or rim of the flange from bending, collapsing, or otherwise being damaged.

### SUMMARY

In one aspect, there is accordingly provided a component of an aircraft engine having an annular flange disposed about a radially outer surface of the component, the annular flange comprising: an annular wall extending radially outwardly from the radially outer surface of the component, the annular wall including radially-extending supports circumferentially spaced apart and extending radially between the radially outer surface of the component and a circumferentially uninterrupted radially outer rim of the annular wall, the annular wall including one or more arcuate cutouts defined circumferentially between adjacent radially-extending supports and radially inwards of the radially outer rim of the annular wall, the radially-extending supports including fastener openings defined axially therethrough; and a spigot extending axially from the radially outer rim of the annular wall, the spigot extending circumferentially about an entire circumference of the radially outer rim of the annular wall.

The component as defined above and described herein may also include one or more of the following features, in whole or in part, and in any combination.

In certain embodiments, one or more radially-extending webs circumferentially subdivide the one or more arcuate cutouts, the radially-extending webs extending from radially-inner edges of the one or more arcuate cutouts to radially-outer edges of the one or more arcuate cutouts.

In certain embodiments, the radially-extending webs subdivide the one or more of the arcuate cutouts into two equal portions.

In certain embodiments, each of the one or more arcuate cutouts include two radially inner corners and two radially outer corners, the two radially outer corners having tighter radii than the two radially inner corners.

In certain embodiments, a first group of the radially-extending supports each include a single fastener opening defined axially therethrough and a second group of the radially-extending supports each include a pair of fastener openings defined axially therethrough.

In certain embodiments, the pairs of fastener openings on the second group of radially-extending supports are circumferentially adjacent.

In certain embodiments, all of the one or more arcuate cutouts have equivalent arc lengths.

In certain embodiments, all of the radially extending supports have equivalent widths.

In certain embodiments, the spigot includes a radially inner spigot surface, a radially outer spigot surface parallel to the radially inner spigot surface, an axial end face joining the radially inner spigot surface to the radially outer spigot surface, and a chamfered portion joining the radially outer spigot surface to the annular wall.

In certain embodiments, the spigot further includes an additional chamfered portion joining the axial end face to the radially inner spigot surface.

In certain embodiments, the one or more arcuate cutouts are machined or laser-cut into the annular wall.

In another aspect, there is provided a mating assembly in an aircraft engine, comprising: a first component having a first body defined about a center axis with an annular flange having an annular wall extending radially outwardly from the first body to a spigot extending axially from a circumferentially uninterrupted radially outer rim of the annular wall, the spigot disposed about an entire circumference of the radially outer rim of the annular wall, the annular flange having a first set of holes extending axially through radially-extending supports circumferentially spaced apart and extending radially between the first body and the radially outer rim of the annular wall with one or more arcuate cutouts defined circumferentially between adjacent radially-extending supports and radially inwards of the radially outer rim of the annular wall; a second component having an annular body with a radially-outer surface and an axial end face with a second set of holes disposed about a circumference of the annular body, the radially-outer surface engaging a radially inner surface of the spigot, the axial end face engaging an axial face of the annular flange with the second set of holes circumferentially aligned with the first set of holes; and threaded fasteners receivable through both the first set of holes and the second set of holes, the threaded fasteners operable for axially retaining the first component and the second component.

The mating assembly as defined above and described herein may also include one or more of the following features, in whole or in part, and in any combination.

In certain embodiments, the radially-outer surface of the second component includes a raised annular shoulder portion abutting a radially inner surface of the spigot.

In certain embodiments, the first component further includes one or more radially-extending webs subdividing the one or more arcuate cutouts, the radially-extending webs extending from radially-inner edges of the one or more arcuate cutouts to radially-outer edges of the one or more arcuate cutouts.

In certain embodiments, each of the one or more arcuate cutouts include two radially inner corners and two radially outer corners, the two radially outer corners having tighter radii than the two radially inner corners.

In certain embodiments, the radially-extending webs subdivide the one or more of the arcuate cutouts into two equal portions.

In certain embodiments, a first group of the radially-extending supports each include a single of the first set of holes extending axially therethrough and a second group of the radially-extending supports each include a pair of the first set of holes extending axially therethrough.

In certain embodiments, the pairs of the first set of holes on the second group of radially-extending supports are circumferentially adjacent.

In certain embodiments, all of the one or more arcuate cutouts have equivalent arc lengths.

In a further aspect, there is provided a method for forming an annular flange disposed about a radially outer surface of a component of an aircraft engine, comprising: providing the component of the aircraft engine having the annular flange with an annular wall extending radially outwardly from the radially outer surface of the component to a radially outer rim of the annular wall from which a spigot extends axially and extends circumferentially about an entire circumference thereof; selectively removing material along a portion of a circumference of the annular flange to form one or more arcuate cutouts defined circumferentially between radially-extending supports and radially inwards of the radially outer rim, the radially-extending supports circumferentially spaced and extending radially between the radially outer surface of the component and the radially outer rim of the annular wall; and forming fastener openings through the radially-extending supports.

### BRIEF DESCRIPTION OF THE DRAWINGS

Reference is now made to the accompanying figures in which:
FIG. 1 is a schematic cross sectional view of a gas turbine engine;
FIGS. 2A to 2C are rear perspective, rear schematic and cross sectional views, respectively, of a mounting assembly;
FIG. 3 is a rear schematic view of a component for a mounting assembly;
FIG. 4 is a rear perspective view of a component for a mounting assembly;
FIGS. 5A and 5B are cross sectional views of a component for a mounting assembly taken along lines VA and VB, respectively, of FIG. 3;
FIG. 6 is an enlarged rear schematic view of a component for a mounting assembly; and
FIG. 7 is a flow diagram of an exemplary method for forming one or more arcuate cutouts in a component for a mounting assembly.

### DETAILED DESCRIPTION

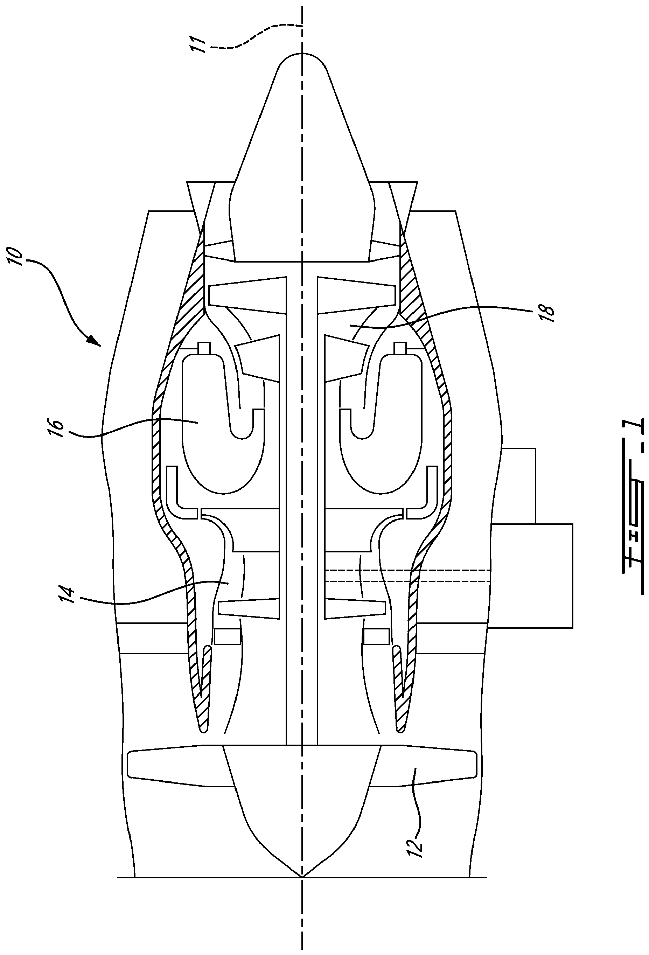

FIG. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. Although FIG. 1 shows a turbofan-type engine, the present disclosure is also applicable to other types of aircrafts.

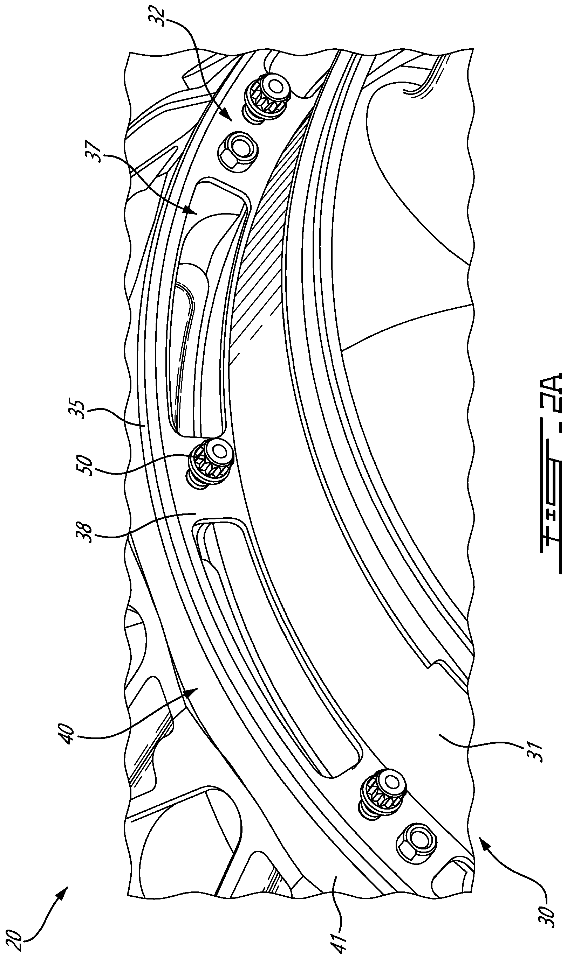

Referring to FIGS. 2A-2C, a mounting assembly 20 for interconnecting or joining two components in engine 10 is shown. Mounting assembly 20, also referred to as a mating assembly 20, includes a first component 30 which is mated or joined to a second component 40, illustratively via threaded fasteners 50. As will be discussed in further detail below, in various embodiments the first component 30 and second component 40 are additionally retained together via one or more annular flanges creating an interference or spigot-fit between radially outer circumferences of the one or more mating flanges. The mounting assembly 20 may be located at various locations within the engine 10, for instance at an inlet to the compressor section 14. Other locations for the mounting assembly 20 may be contemplated as well.

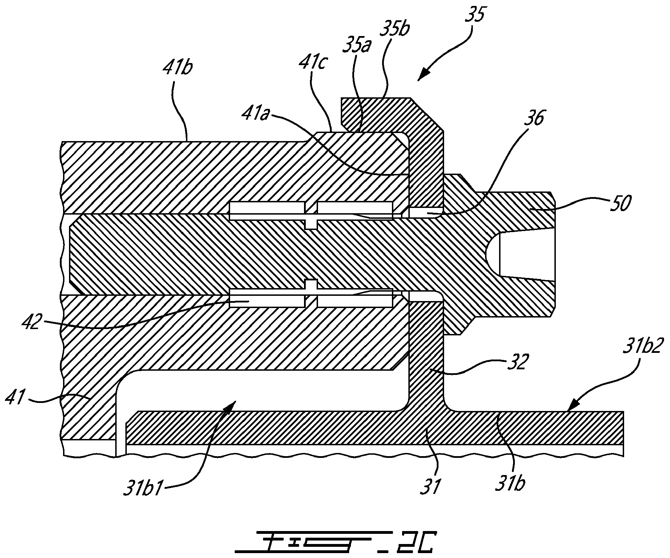

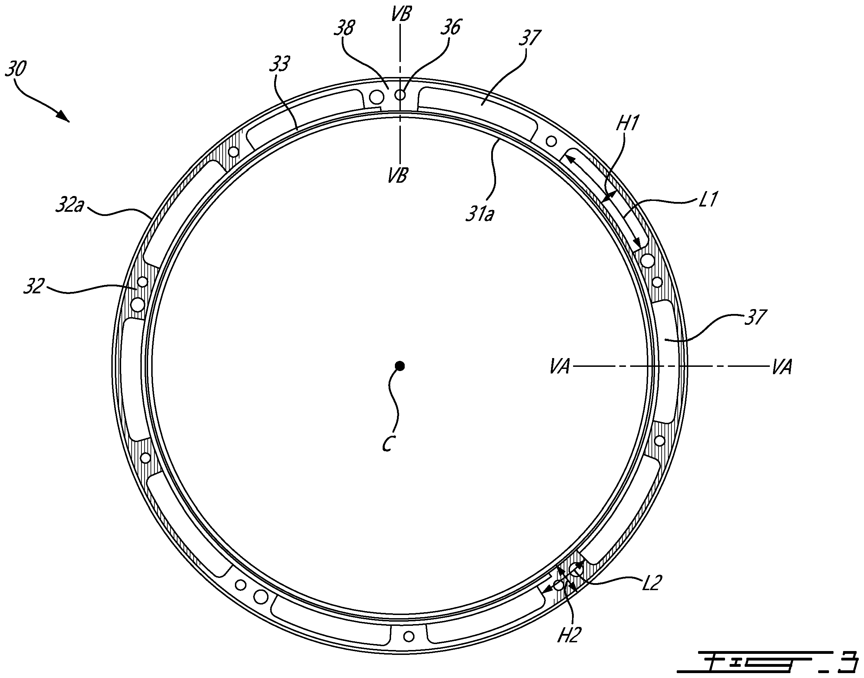

Referring additionally to FIGS. 3-5B, the shown first component 30 includes an annular body 31 disposed about a center C. In the illustrated embodiment, although not necessarily the case in all embodiments, a central axis 11 of the engine 10 (FIG. 1) passes through the center C of the annular body 31. The annular body 31 includes a radially-inner circumferential surface 31a and a radially-outer circumferential surface 31b. The first component 30 includes an annular flange 32 protruding axially from the radially-outer circumferential surface 31b of the annular body 31 and is circumferentially disposed about the annular body 31. The annular flange 32 is operable to receive and abut against a corresponding surface of the second component 40, as shown in FIG. 2C and as will be discussed in further detail below.

The annular flange 32, also referred to as an annular wall, divides the radially-outer circumferential surface 31b into a first side 31b1 and a second side 31b2. The first side 31b1, also referred to as the front side of the flange 32, is operable to receive the second component 40. The second side 31b2, also referred to as the rear side of the flange 32, illustratively includes additional radially-outward extending portions 33 and slots 34. Such radially-outward extending portions 33 and slots 34 may, for instance, be operable to allow the first component 30 engage with additional components of the engine 10. Additional or other features on the the first side 31b1 and/or second side 31b2 may be present as well. An axial width W of the annular body 31 may vary, for instance based on the location and nature of the mating assembly 20 within the engine 10.

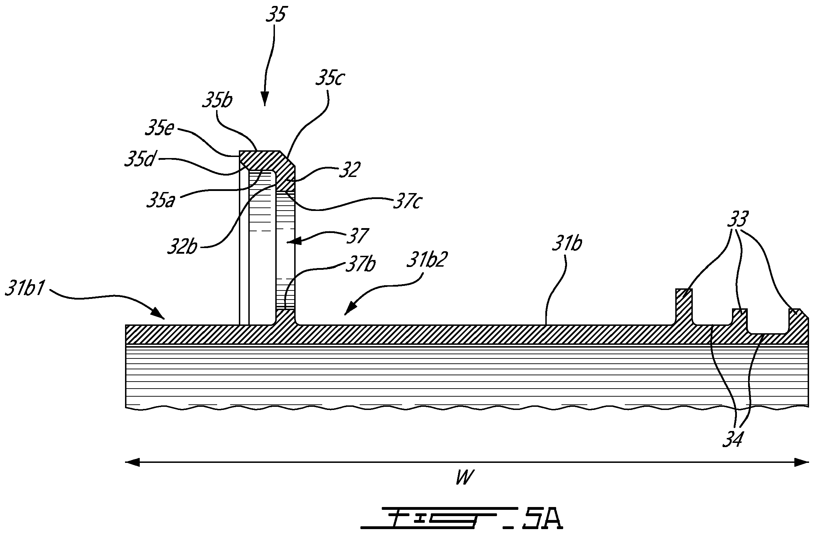

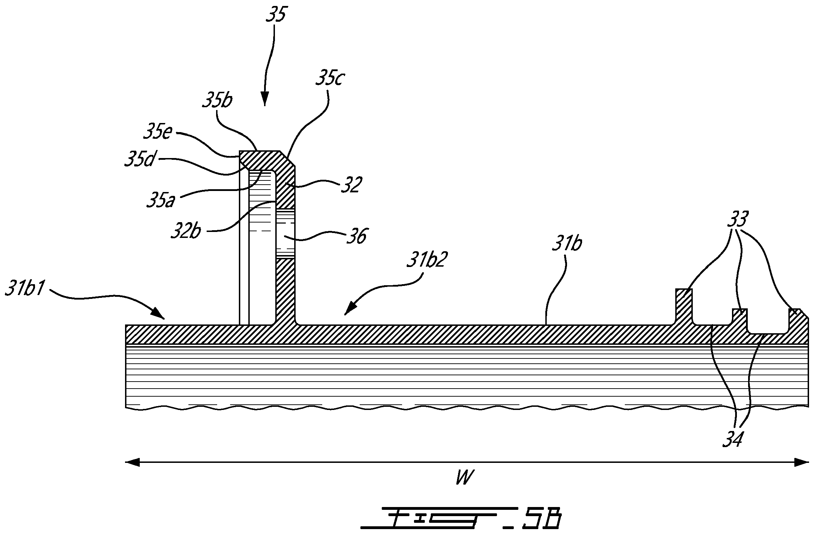

As best shown in FIGS. 5A-5B, the first component 30 includes, at a radially outer rim 32a of the annular flange 32, a spigot 35. The spigot 35, also referred to as an outer peripheral rim, extends axially from the radially outer rim 32a of the annular flange 32, illustratively towards the first side 31b1. The shown spigot 35 includes a radially inner spigot surface 35a forming a ninety degree angle with an axial face 32b on a first side 31b1 surface of the annular flange 32. This corner may be curved, as shown in FIGS. 5A-5B. The spigot further includes a radially outer spigot surface 35b, and an angled or chamfered outer spigot portion 35c joining the radially outer spigot surface 35b with a second side 31b2 surface of the annular flange 32. The axial width of spigot 35 may vary. In addition, as shown in FIGS. 5A-5B, an additional chamfered portion 35d may join an axial face 35e at an axial end of the spigot 35 to the radially inner spigot surface 35a. The annular flange 32 further includes a first set of holes 36 operable to receive threaded fasteners 50 (hereinafter referred to as "fasteners 50") for retaining the first component 30 to the second component 40, as will be discussed in further detail below. The first set of holes 36 may also be referred to as fastener openings. The diameters of the various holes 36 may vary, for instance to receive fasteners 50 of varying sizes.

Referring to FIGS. 2A and 2C, the second component 40 may be any component within the engine 10 that engages and mates with the first component 30 via the annular flange 32. For instance, the second component 40 may form part of the inlet of the compressor section 14 of the engine 10. As shown in FIGS. 2A and 2C, the second component 40 includes an annular body 41 that is operable to engage with the annular flange 32 and spigot 35 of the first component 30. The annular flange 32 is considered an 'outside fit' flange, and as such the annular body 41 is operable to engage with the radially outer rim 32a of the annular flange 32 for an interference fit. In particular, an axial end face 41a of the annular body 41 is operable to abut against the axial face 32b on the first side 31b1 of the annular flange 32, while the interference fit is created by a radially-outer surface 41b of the annular body 41 abutting or engaging with the radially inner spigot surface 35a. In the embodiment shown in FIG. 2C, although not necessarily the case in all embodiments, the radially-outer surface 41b may include a raised annular shoulder portion 41c to further increase the interference fit. The friction created by this interference fit may prevent the separation of the first component 30 and the second component 40. This interference fit may centralize the first component 30 and the second component 40 relative to each other relative to the central axis 11, while the contact between the axial end face 41a and the axial face 32b of the annular flange 32 may axially locate the first component 30 and the second component 40 relative to each other. The interference fit is maintained about the entire outer circumference of the annular flange 32, i.e. the radially outer rim 32a, in an uninterrupted fashion.

The second component 40 further includes a second set of holes 42 passing axially through the axial end face 41a. The number, diameter and arrangement of the second set of holes 42 may correspond to the number, diameter and arrangement of the first set of holes 36 in the annular flange 32 of the first component 30. As such, the fasteners 50 are operable to pass through corresponding first set of holes 36 and second set of holes 42, thus retaining the first component 30 to the second component 40 and holding or maintaining the interface between the flange 32 and the annular body 41. In some cases, the second set of holes 42 may extend only partially through the second component 40. In such cases, the second set of holes 42 may be threaded and the fasteners 50 may be screws. In other cases, the second set of holes 42 may be located on an annular flange (not shown) on the second component, the second set of holes 42 being through-holes. In such cases, the fasteners 50 may be bolts that are retained with nuts on an opposite side of the flange of the second component 40. Other arrangements may be contemplated as well.

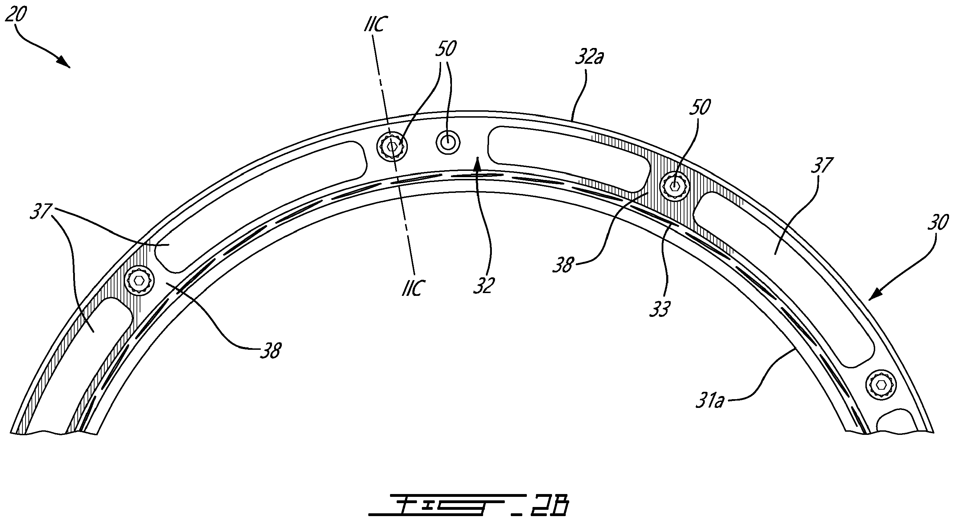

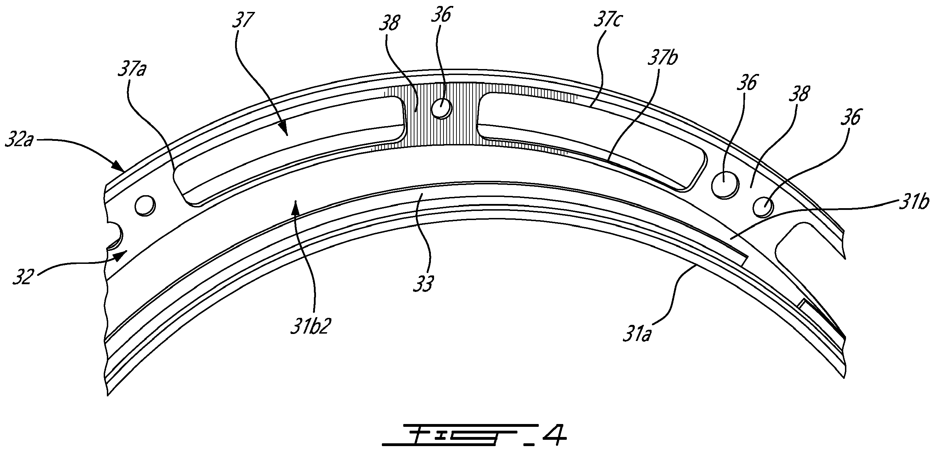

Referring to FIGS. 3-5B, the first component 30 includes one or more arcuate cutouts 37 about the circumference of the annular flange 32. The cutouts 37 may also be referred to as windows, as they pass through the annular flange 32 from the first side 31b1 to the second side 31b2. The cutouts 37 are each defined by a radial height H1 and an arc length L1 (see FIG. 3). In some embodiments, the cutouts 37 may all be equal, i.e. having the same radial height H1 and arc length L1. In other embodiments, for instance in the first component 30 shown in FIG. 2B, the cutouts 37 may have different dimensions from one another. In some cases, the cutouts 37 may have fully rounded corners 37a, as shown in FIG. 4. In other cases, some or all of the corners 37a may be squared or angled. The cutouts 37 may be formed via material removal from the annular flange 32 to reduce the overall weight of the first component 30, as will be discussed in further detail below.

Radially-extending supports 38 are circumferentially spaced apart between adjacent cutouts 37. These supports 38 extend radially between the annular body 31 and the radially outer rim 32a of the annular flange 32. As best shown in FIGS. 3-4, the first set of holes 36 are located on the supports 38. The number of supports 38 may vary, and the supports 38 are each defined by a radial height H2 and a width or arc length L2 (see FIG. 3). In some cases, the supports 38 may all be equivalently sized, while in other cases the supports 38 may be dimensioned differently from one another. As best shown in FIG. 4, in the radial heights H2 of the depicted supports 38 are all equal, as they each extend from the annular body 31 to the radially outer rim 32a. In other cases, for instance where the annular body 31 included a raised shoulder portion (not shown), some supports 38 may include lesser radial heights H2 than others. The arc lengths L2 may vary from one support 38 to the other. For instance, as shown in FIG. 4, the number of holes 36 on a given support 38 may require a greater arc length L2. As shown in FIG. 4, some supports 38 (i.e. a first group of supports 38) may include a single hole 36 while other supports (i.e. a second group of supports 38) may include two adjacent or side-by-side holes 36. Radially-aligned holes 36 on a given support 38 may be contemplated as well. Additionally or alternatively, the number and sizing of cutouts 37 may affect the number and arc lengths L2 of supports 38, as the supports 38 are formed by the leftover material that is not removed when the cutouts 37 are formed. Other factors affecting the number and sizing of the supports 38 may be contemplated as well.

In an assembled configuration and while the engine 10 is powered on, the mounting assembly 20, and in particular the annular flange 32, is subject to various stresses. As such, by maintaining a constant outer periphery at the interference fit at the radially outer rim 32a, the annular flange 32 may be able to withstand such stresses. For instance, despite the removal of material for the cutouts 37, the supports 38 and the consistent radially outer rim 32a may provide sufficient hoop strength to the annular flange 32 so that the radially outer rim 32a does not bend inward under stress. The consistent radially outer rim 32a additionally may provide a constant interference fit between the radially-outer surface 41b of the second component and the spigot 35.

Various methods for removing material to create the cutouts 37 in the annular flange 32 may be contemplated. For instance, traditional machining techniques such as milling may be used. Alternatively, the cutouts 37 may be formed in the annular flange 32 via laser-cutting. Other techniques may be contemplated as well. As material is removed to form the cutouts 37 between the annular body 31 and the radially outer rim 32a, enough material is left at the radially outer rim 32a to provide sufficient strength to the radially outer rim 32a and to ensure that the radially outer rim 32a is circumferentially continuous or uninterrupted (i.e. the radial height H1 of each cutout 37 is defined). In an embodiment, a bolt pattern is predetermined for the annular flange 32 and the first set of holes 36 are drilled. Then, material is removed from the annular flange 32 between adjacent holes 36 to create the cutouts 37. The arc lengths L1 of the various cutouts 37 may be selected based on required arc lengths L2 of supports 38, for instance based on the structural requirements of the annular flange 32. Other methods for forming the cutouts 37 may be contemplated as well. For instance, the bolt pattern and arrangement of cutouts 37 may be optimized for sufficient retention between the first component 30 and second component 40 and for adequate weight reduction of the annular flange 32. Various materials such as steel, nickel and titanium may be contemplated for the first and second components 30, 40, for instance based on their respective locations in the engine 10.

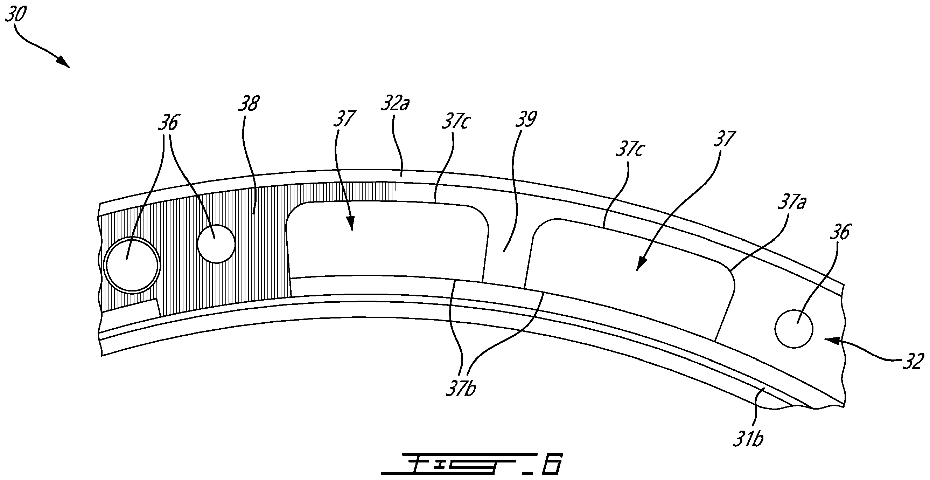

Referring to FIG. 6, in some embodiments the cutouts 37 include local webbings 39. These webbings 39, also referred to as webs, may provide additional stiffness to the annular flange 32, for instance in cases where respective cutouts 37 are relatively wide (i.e. with large arc lengths L1). In the embodiment shown in FIG. 6, the webbing 39 is an additional radial support subdividing a cutout 37 and extending between a radially-inner edge 37b of the cutout 37 to a radially-outer edge 37c of the cutout 37, although other types of local webbing 39 may be contemplated as well. For instance, in some embodiments a given cutout 37 may include more than one webbing 39. The number of support webbings 39 in a given cutout 37 may vary based on the arc length L1 of that cutout 37, wherein a wider cutout 37 may require a greater number of webbings 39 for sufficient support. In other embodiments, the webbings 39 may be angled rather than extending in a radial direction. In some embodiments, webbings 39 in a given cutout 37 may intersect as well. Other webbing 39 patterns may be contemplated as well. In the embodiment shown in FIG. 6, each intersected cutout 37 includes radially inner corners (i.e. along radially inner edges 37c) and two radially outer corners (i.e. along radially outer edges 37c), the two radially outer corners having tighter radii than the two radially inner corners.

As shown in FIG. 6, the webbings 39 may be narrower (i.e. in a circumferential direction) than the supports 38. In addition, in the embodiment shown in FIG. 6, the webbings 39 do not include holes 36 for fasteners 50. In some embodiments, each of the cutouts 37 include webbings 39. In other embodiments, some of the cutouts 37 may include webbings 39, for instance those that meet a minimum arc length L1 threshold, while other narrower cutouts 37 may not include webbings 39. The webbings 39 may be fashioned during the material removal process during which the cutouts 37 are formed. For instance, rather than machining a single cutout 37 between adjacent holes 36, adjacent cutouts 37 with webbing 39 therebetween may be formed. Other methods for forming the webbings 39 may be contemplated as well.

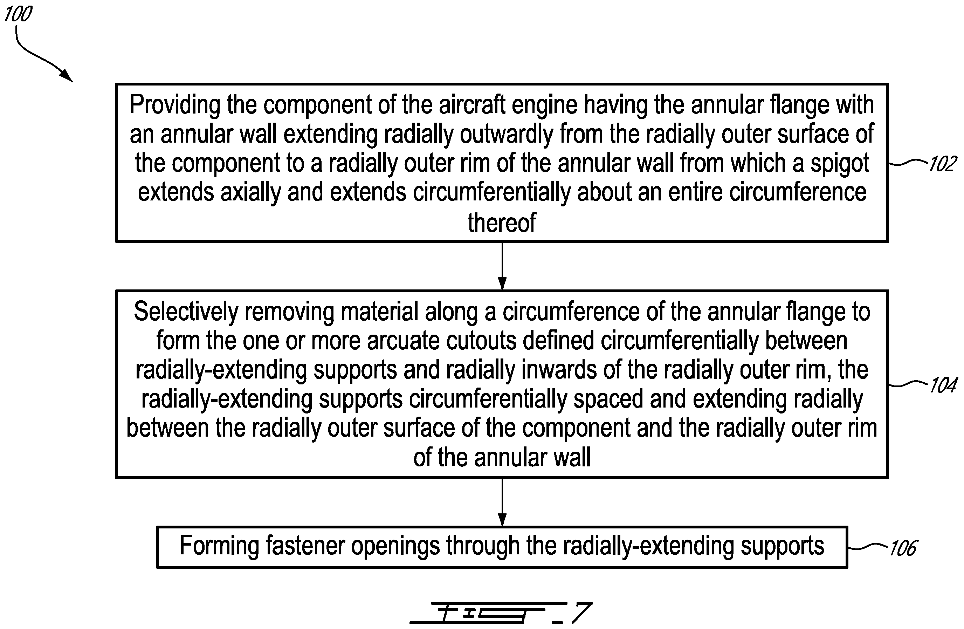

Referring to FIG. 7, an exemplary method 100 for forming one or more arcuate cutouts 37 in an annular flange 32 disposed about a radially outer surface 31b of a component 30 of an aircraft engine 10 is shown. At step 102, the component 30 of the aircraft engine 10 is provided having the annular flange 32 with an annular wall extending radially outwardly from the radially outer surface 31b of the component 30 to a radially outer rim 32a of the annular wall from which a spigot 35 extends axially and extends circumferentially about an entire circumference thereof. At step 104, material is selectively removed along a circumference of the annular flange 32 to form the one or more arcuate cutouts 37 defined circumferentially between radially-extending supports 38 and radially inwards of the radially outer rim 32a, the radially-extending supports 38 circumferentially spaced and extending radially between the radially outer surface 31b of the component 30 and the radially outer rim 32a of the annular wall. At step 106, holes or fastener openings 36 are formed through the radially-extending supports 38. Additional and/or alternative steps may be contemplated as well.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A component (30) of an aircraft engine (10) having an annular flange (32) disposed about a radially outer surface (31b) of the component (30), the annular flange (32) comprising:
an annular wall extending radially outwardly from the radially outer surface (31b) of the component (30), the annular wall including radially-extending supports (38) circumferentially spaced apart and extending radially between the radially outer surface (31b) of the component (30) and a circumferentially uninterrupted radially outer rim (32a) of the annular wall, the annular wall including one or more arcuate cutouts (37) defined circumferentially between adjacent radially-extending supports (38) and radially inwards of the radially outer rim (32a) of the annular wall, the radially-extending supports (38) including fastener openings (36) defined axially therethrough; and
a spigot (35) extending axially from the radially outer rim (32a) of the annular wall, the spigot (35) extending circumferentially about an entire circumference of the radially outer rim (32a) of the annular wall.

2. The component (30) of an aircraft engine (10) as defined in claim 1, further comprising one or more radially-extending webs (39) circumferentially subdividing the one or more arcuate cutouts (37), the radially-extending webs (39) extending from radially-inner edges (37b) of the one or more arcuate cutouts (37) to radially-outer edges (37c) of the one or more arcuate cutouts (37).

3. The component (30) of an aircraft engine (10) as defined in claim 2, wherein the radially-extending webs (39) subdivide the one or more of the arcuate cutouts (37) into two equal portions.

4. The component (30) of an aircraft engine (10) as defined in any one of the preceding claims, wherein each of the one or more arcuate cutouts (37) include two radially inner corners and two radially outer corners, the two radially outer corners having tighter radii than the two radially inner corners.

5. The component (30) of an aircraft engine (10) as defined in any one of the preceding claims, wherein a first group of the radially-extending supports (38) each include a single fastener opening (36) defined axially therethrough and a second group of the radially-extending supports (38) each include a pair of fastener openings (36) defined axially therethrough.

6. The component (30) of an aircraft engine (10) as defined in claim 5, wherein the pairs of fastener openings (36) on the second group of radially-extending supports (38) are circumferentially adjacent.

7. The component (30) of an aircraft engine (10) as defined in any one of the preceding claims, wherein all of the one or more arcuate cutouts (37) have equivalent arc lengths (L1).

8. The component (30) of an aircraft engine (10) as defined in any one of the preceding claims, wherein all of the radially extending supports (38) have equivalent widths (L2).

9. The component (30) of an aircraft engine (10) as defined in any one of the preceding claims, wherein the spigot (35) includes a radially inner spigot surface (35a), a radially outer spigot surface (35b) parallel to the radially inner spigot surface (35a), an axial end face (35e) joining the radially inner spigot surface (35a) to the radially outer spigot surface (35b), and a chamfered portion (35c) joining the radially outer spigot surface (35b) to the annular wall.

10. The component (30) of an aircraft engine (10) as defined in claim 9, wherein the spigot (35) further includes an additional chamfered portion (35d) joining the axial end face (35e) to the radially inner spigot surface (35a).

11. The component (30) of an aircraft engine (10) as defined in any one of the preceding claims, wherein the one or more arcuate cutouts (37) are machined or laser-cut into the annular wall.

12. A mating assembly (20) in an aircraft engine (10), comprising:
the component (30) as defined in any one of the preceding claims;
a second component (40) having an annular body (41) with a radially-outer surface (41b) and an axial end face (41a) with a second set of holes (42) disposed about a circumference of the annular body (41), the radially-outer surface (41b) engaging a radially inner surface (35a) of the spigot (35) of the component (30), the axial end face (41a) engaging an axial face (32b) of the annular flange (32) of the component (30), with the second set of holes (42) circumferentially aligned with the fastener openings (36); and
threaded fasteners (50) received through the fastener openings (36) and the second set of holes (42), the threaded fasteners (50) axially retaining the component (30) and the second component (40) together.

13. A method for forming an annular flange (32) disposed about a radially outer surface (31b) of a component (30) of an aircraft engine (10), comprising:
providing the component (30) of the aircraft engine (10) having the annular flange (32) with an annular wall extending radially outwardly from the radially outer surface (31b) of the component (30) to a radially outer rim (32a) of the annular wall from which a spigot (35) extends axially and extends circumferentially about an entire circumference thereof;
selectively removing material along a portion of a circumference of the annular flange (32) to form one or more arcuate cutouts (37) defined circumferentially between radially-extending supports (38) and radially inwards of the radially outer rim (32a), the radially-extending supports (38) circumferentially spaced and extending radially between the radially outer surface (31b) of the component (30) and the radially outer rim (32a) of the annular wall; and
forming fastener openings (36) through the radially-extending supports (38).
